# FASCICULE DE BREVET EUROPEEN

(11) **EP 2 900 928 B1**
(45) Date de publication et mention de la délivrance du brevet: **19.08.2020**
(21) Numéro de dépôt: 13789600.7
(22) Date de dépôt: 17.09.2013
(51) Int. Cl.: F01D 5/30, F01D 5/28

(54) **AUBE POUR TURBOMACHINE ET TURBOMACHINE ASSOCIÉE**
TURBOMASCHINENSCHAUFEL UND ZUGEHÖRIGE TURBOMASCHINE
TURBOMACHINE BLADE AND CORRESPONDING TUROMACHINE

(30) Priorité: 26.09.2012 FR 1259014
(43) Date de publication de la demande: 05.08.2015
(73) Titulaire: Safran Aircraft Engines, 75015 Paris (FR); Safran Ceramics, 33185 Le Haillan (FR)
(72) Inventeur: LE HONG, Son, 77550 Moissy-cramayel Cedex (FR)
(74) Mandataire: Cabinet Beau de Loménie
(86) Numéro de dépôt international: PCT/FR2013/052123
(87) Numéro de publication internationale: WO 2014/049225

(56) Documents cités:
- EP-A2- 2 469 031
- FR-A1- 2 608 674

## Description

### Arrière-plan de l'invention

La présente invention se rapporte au domaine général des aubes pour turbomachine en matériau composite dont le pied présente une forme de bulbe pour être monté sur un disque de rotor par une liaison de type à queue d'aronde.

Le domaine visé est celui d'aubes de turbines à gaz pour moteurs aéronautiques ou turbines industrielles.

La réalisation d'aubes en matériau composite pour des turbomachines a déjà été proposée. On pourra par exemple se référer à la demande de brevet internationale WO 2010/061140 déposée conjointement aux noms de Snecma et de Snecma Propulsion Solide qui décrit la fabrication d'une aube de turbomachine par réalisation d'une préforme fibreuse par tissage tridimensionnel et densification de la préforme par une matrice.

Par ailleurs, pour le montage d'une telle aube sur un disque de rotor, il est connu de conférer au pied d'aube une forme de bulbe. Le pied d'aube avec sa forme de bulbe coopère avec une rainure de forme correspondante pratiquée à la périphérie du disque de rotor pour assurer la retenue radiale de l'aube sur le disque par une liaison de type à queue d'aronde.

Dans le cas d'une aube en matériau composite, la forme de bulbe du pied d'aube est généralement réalisée au cours du tissage de l'ébauche fibreuse qui constituera l'aube en formant une surépaisseur au niveau du pied d'aube, cette surépaisseur étant ensuite usinée aux formes définitives du bulbe. En pratique, la surépaisseur est le plus souvent obtenue par ajout d'un insert lors du tissage de l'ébauche fibreuse.

Cependant, un tel procédé de fabrication d'une aube en matériau composite avec un pied en forme de bulbe présente de nombreux inconvénients. En effet, la réalisation de l'insert et son positionnement au cours du tissage de l'ébauche fibreuse de l'aube sont des opérations très délicates. En outre, ce procédé nécessite d'usiner la surépaisseur du pied d'aube à ses formes définitives, ce qui a pour conséquence d'altérer les propriétés intrinsèques du matériau composite, notamment en coupant des fibres au niveau des portées du pied d'aube. Il en résulte une dégradation de l'attache de l'aube en termes de tenue mécanique.

On connaît également du document FR 2,941,487 une solution de montage d'une aube en matériau composite sur un disque de rotor dans laquelle le pied d'aube est enserré entre des plaques métalliques qui sont fixées par l'intermédiaire d'un pion soudé. Avec cette solution, l'effort principal de retenue de l'aube sur le disque de rotor est repris par le cisaillement du pion et le matage du trou dans le matériau composite. Toutefois, la différence de dilatation entre le métal des plaques et le matériau composite du pied génère soit des contraintes de cisaillement thermique si la fixation est rigide, soit une incertitude sur le positionnement des portées si la fixation est réalisée avec un jeu.

### Objet et résumé de l'invention

La présente invention a donc pour but principal de proposer une aube en matériau composite dont l'attache sur un disque de rotor par une liaison de type à queue d'aronde ne présente pas les inconvénients précités.

Ce but est atteint grâce à une aube pour turbomachine en matériau composite comprenant un renfort fibreux obtenu par tissage tridimensionnel de fils et densifié par une matrice, l'aube comprenant une pale et un pied d'aube formant une seule pièce, le pied d'aube ayant deux flancs latéraux opposés sensiblement plans, et dans laquelle, conformément à l'invention, le pied d'aube est enserré entre deux plaquettes indépendantes en matériau composite qui sont fixées contre les flancs latéraux du pied d'aube de sorte à former un pied d'aube en forme de bulbe.

Le pied de l'aube selon l'invention possède ainsi trois parties en matériau composite, à savoir le pied en forme de plaque (avec ses flancs latéraux plans), et les deux plaquettes reconstituant le profil d'un bulbe. Une telle aube présente de nombreux avantages.

En termes de réalisation, l'aube selon l'invention est de conception simplifiée puisque la partie du pied d'aube en forme de plaque est plus aisé à obtenir qu'une forme de bulbe. Il en résulte la possibilité d'améliorer la qualité du pied d'aube et une réduction de son coût de fabrication. De plus, la cohésion entre les différentes parties du pied d'aube est assurée par des interfaces planes, qui sont aisées à maîtriser en production (fabrication et contrôles).

En termes de tenue mécanique de l'attache d'une telle aube, les plaquettes du pied d'aube peuvent être fabriquées dans un matériau composite parfaitement adapté à la sollicitation mécanique très forte à laquelle le pied est soumis. En particulier, on privilégiera un matériau avec un ratio chaîne-trame le plus élevé possible, voire un matériau unidirectionnel (c'est-à-dire 100% chaîne, le sens chaîne s'étendant dans la direction longitudinale de l'aube). La contrainte admissible d'un tel matériau est ainsi notablement supérieure à celle d'un matériau obtenu sur un pied d'aube tissé classiquement. De plus, les plaquettes peuvent être réalisées de manière à obtenir une face « net-shape » du côté extérieur, c'est-à-dire une face sans fibres coupées dans la zone la plus sollicitée mécaniquement. Enfin, les différentes parties du pied d'aube étant réalisées en matériau composite, il n'y a pas de dilatation différentielle entre les pièces et donc pas de contrainte de cisaillement thermique au niveau de l'interface entre ces parties.

De préférence, chaque plaquette comprend un flanc latéral sensiblement plan destiné à venir en contact contre un flanc latéral du pied d'aube et un flanc latéral opposé qui présente un profil évolutif reproduisant une portée de pied d'aube. Dans ce cas, les plaquettes peuvent être obtenues par moulage d'une préforme fibreuse et densification de la préforme moulée.

Les plaquettes peuvent être fixées contre les flancs latéraux du pied d'aube par brasage, codensification ou dépôt de matrice.

Le pied d'aube et les plaquettes peuvent être réalisés en matériau composite à matrice céramique (CMC). De préférence, les plaquettes sont réalisées à partir d'un renfort fibreux à base de fibres SiC.

L'invention a également pour objet une turbomachine comprenant une pluralité d'aubes telles que définies précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue montrant l'assemblage d'une aube de turbomachine conforme à l'invention ;
- la figure 2 est une vue en perspective de l'aube de la figure 1 une fois assemblée ;
- la figure 3 est une vue de profil de l'aube de la figure 2 ; et
- la figure 4 est une vue en coupe de pieds d'aubes conformes à l'invention qui sont montées sur un disque de rotor.

### Description détaillée de l'invention

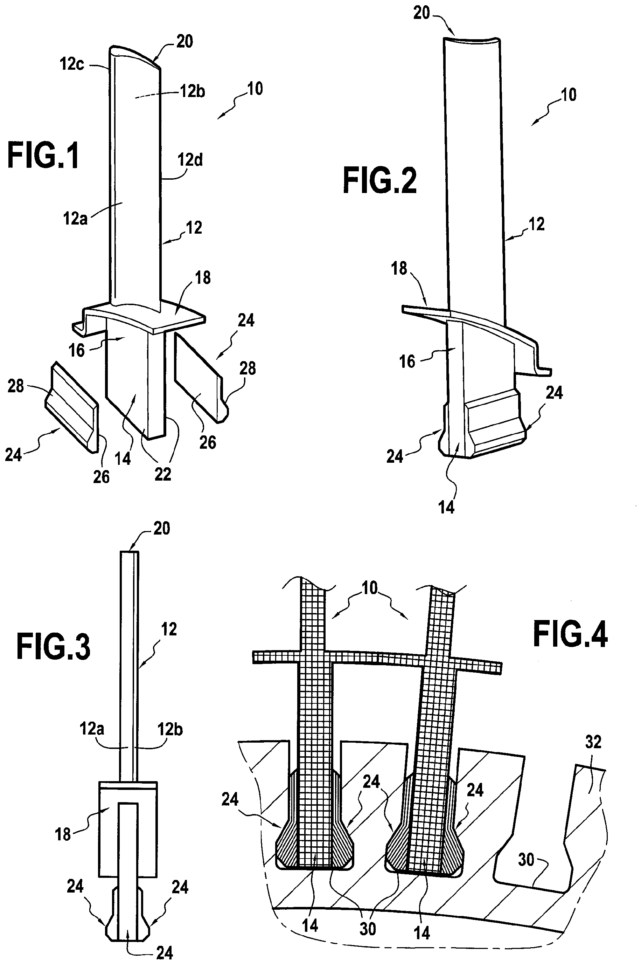

L'invention est applicable à différentes aubes en matériau composite pour turbomachine, notamment aux aubes de compresseur et de turbine de différents corps d'un moteur à turbine à gaz, par exemple aux aubes de turbine basse-pression telles que celles illustrées sur les figures 1 à 4.

De façon connue en soi, l'aube 10 illustrée sur ces figures comprend une pale 12, un pied 14 prolongé par une échasse 16, et une plateforme 18 située entre l'échasse 16 et la pale 12. L'aube pourrait également comporter un talon (non représenté) au voisinage de l'extrémité libre 20 (ou sommet) de la pale.

La pale 12 de l'aube présente un profil aérodynamique incurvé qui s'étend (en direction longitudinale) depuis la plateforme 18 jusqu'à son sommet 20. Ce profil est d'épaisseur variable et est formé d'une surface intrados 12a et d'une surface extrados 12b qui sont reliées transversalement par un bord d'attaque 12c et un bord de fuite 12d.

Le pied 14 de l'aube est ici en forme de bulbe et est destiné à être monté dans une rainure formée à la périphérie d'un disque de rotor par une liaison de type à queue d'aronde.

L'aube 10 est en matériau composite, et de préférence en matériau composite à matrice céramique (CMC). On pourra par exemple se référer à la demande de brevet internationale WO 2010/061140 qui décrit un exemple de fabrication d'une aube de turbomachine par réalisation d'une préforme fibreuse par tissage tridimensionnel et densification de la préforme par une matrice.

Plus particulièrement, ce procédé prévoit la réalisation par tissage tridimensionnel d'une ébauche fibreuse en une seule pièce, la mise en forme de l'ébauche fibreuse pour obtenir une préforme fibreuse en une seule pièce ayant une première partie formant préforme de pale et pied d'aube et au moins une deuxième partie formant préforme de plateforme ou talon d'aube, et la densification de la préforme par une matrice. Ce procédé permet ainsi d'obtenir une aube en matériau composite ayant un renfort fibreux constitué par la préforme et densifié par la matrice, et formant une seule pièce avec plateforme et/ou talon intégrés.

Par son procédé particulier de fabrication, le pied d'aube 14 présente une forme de plaque (c'est-à-dire parallélépipédique) avec deux flancs latéraux 22 opposés qui sont sensiblement plans et qui sont formés dans le prolongement respectif des surfaces intrados 12a et extrados 12b de la pale 12.

Selon l'invention, le pied 14 de l'aube 10 est enserré entre deux plaquettes indépendantes 24 en matériau composite qui sont fixées contre les flancs latéraux 22 du pied d'aube de sorte à former un pied d'aube en forme de bulbe.

Les plaquettes 24 en matériau composite comprennent chacune un flanc latéral 26 qui est sensiblement plan (appelé ci-après « flanc latéral plan ») pour venir en contact plan contre un flanc latéral 22 du pied d'aube 14 et un flanc latéral 28 opposé qui présente un profil évolutif reproduisant une portée de pied d'aube (appelé ci-après « flanc latéral profilé »).

Les plaquettes 24 sont de préférence obtenues par un tissage tridimensionnel d'une ébauche fibreuse, suivi du moulage de l'ébauche fibreuse pour obtenir une préforme fibreuse de plaquette aux formes géométriques souhaitées, et densification de la préforme fibreuse par une matrice. En particulier, la face latérale de l'ébauche fibreuse correspondant au flanc latéral profilé de la plaquette est moulée pour lui conférer un profil de portée de pied d'aube.

L'ébauche fibreuse sera de préférence tissée de sorte à présenter un ratio chaîne-trame le plus élevé possible, voire avec uniquement des fils en sens chaîne (le sens chaîne correspondant à la direction longitudinale de l'aube à fabriquer). De la sorte, la contrainte admissible d'un tel matériau est notablement supérieure à celle du matériau utilisé pour la fabrication du pied d'aube.

De même, grâce au moulage, les plaquettes peuvent être réalisées de manière à obtenir un flanc latéral profilé 28 qui soit « net-shape », c'est-à-dire une face sans fibres coupées. Comme il s'agit de la zone du pied qui est la plus sollicitée mécaniquement, un tel procédé « net-shape » améliore grandement la tenue mécanique du pied d'aube sur le disque de rotor.

Pour le matériau composite, on choisira de préférence un matériau composite à matrice céramique (comme pour la réalisation de l'aube). Avantageusement, le renfort fibreux sera à base de fibres de carbure de silicium commercialisées sous la dénomination « Hi-Nicalon® de type S» par la société Nippon Carbon Co., Ltd. De telles fibres présentent l'avantage de conférer localement au pied d'aube une excellente tenue mécanique.

Par ailleurs, on pourra appliquer sur le flanc latéral profilé 28 des plaquettes 24 un revêtement de surface spécifique destiné à améliorer la tenue des plaquettes au frottement. Ce revêtement pourra être différent de celui éventuellement appliqué à la pale de l'aube. Par exemple, on pourra appliquer des revêtements ayant une fonction lubrifiante comme le graphite, le CoCrAlYSi ou le MoS2.

Les plaquettes 24 sont fixées sur les flancs latéraux 22 du pied d'aube 14 par tout procédé connu de fixation de pièces en matériau composite. Ainsi, on pourra recourir au brasage, à la codensification, au dépôt de matrice ou tout autre procédé équivalent. Cette fixation est réalisée entre deux surfaces sensiblement planes, ce qui en facilite la réalisation.

On notera qu'il est possible de fixer des éléments supplémentaires sur le pied d'aube de la même manière que pour les plaquettes donnant au pied sa forme de bulbe. Ces éléments peuvent permettre de réaliser des fonctions d'étanchéité et/ou d'anti-basculement de l'aube, et ainsi de simplifier la réalisation de la plateforme de l'aube. Alternativement, ces éléments pourront être intégrés directement aux plaquettes.

La figure 4 représente des aubes 10 telles que décrites précédemment qui sont montées dans des rainures 30 (ou alvéoles) ménagées à la périphérie d'un disque de rotor 32. Typiquement, de telles rainures s'étendent axialement entre les deux faces latérales du disque de rotor et présentent chacune une forme complémentaire à la forme en bulbe des pieds d'aube.

Sur cette figure, les fils de chaîne et de trame du tissage des ébauches fibreuses des aubes et des plaquettes ont été représentés. En particulier, par rapport au tissage du pied d'aube 14, on constate que les ébauches fibreuses des plaquettes 24 ont été avantageusement tissées avec uniquement des fils en sens chaîne, ce qui augmente sensiblement la contrainte admissible de ces plaquettes.

## Revendications

1. Aube (10) pour turbomachine en matériau composite comprenant un renfort fibreux obtenu par tissage tridimensionnel de fils et densifié par une matrice, l'aube comprenant une pale (12) et un pied d'aube (14) formant une seule pièce, le pied d'aube ayant deux flancs latéraux (22) opposés sensiblement plans, **caractérisée en ce que** le pied d'aube est enserré entre deux plaquettes (24) indépendantes en matériau composite qui sont fixées contre les flancs latéraux du pied d'aube de sorte à former un pied d'aube en forme de bulbe.

2. Aube selon la revendication 1, dans laquelle chaque plaquette (24) comprend un flanc latéral (26) sensiblement plan destiné à venir en contact contre un flanc latéral du pied d'aube et un flanc latéral (28) opposé qui présente un profil évolutif reproduisant une portée de pied d'aube.

3. Aube selon la revendication 2, dans laquelle les plaquettes (24) sont obtenues par moulage d'une préforme fibreuse et densification de la préforme moulée.

4. Aube selon l'une quelconque des revendications 1 à 3, dans laquelle les plaquettes (24) sont fixées contre les flancs latéraux du pied d'aube par brasage, codensification ou dépôt de matrice.

5. Aube selon l'une quelconque des revendications 1 à 4, comprenant en outre une plateforme (18) formant une seule pièce avec la pale et le pied d'aube.

6. Aube selon l'une quelconque des revendications 1 à 5, dans laquelle le pied d'aube (14) et les plaquettes (24) sont réalisés en matériau composite à matrice céramique.

7. Aube selon la revendication 6, dans laquelle les plaquettes (24) sont réalisées à partir d'un renfort fibreux à base de fibres SiC.

8. Turbomachine comprenant une pluralité d'aubes (10) selon l'une quelconque des revendications 1 à 7.

## Patentansprüche

1. Turbomaschinenschaufel (10) aus Verbundwerkstoff, umfassend eine Faserverstärkung, die durch dreidimensionales Weben von Fäden erhalten wird und durch eine Matrix verdichtet ist, wobei die Schaufel ein Blatt (12) und einen Schaufelfuß (14), welche einstückig ausgebildet sind, aufweist, wobei der Schaufelfuß zwei gegenüberliegende, im Wesentlichen plane Seitenflanken (22) aufweist, **dadurch gekennzeichnet, dass** der Schaufelfuß zwischen zwei unabhängigen Platten (24) aus Verbundwerkstoff eingespannt ist, die an den Seitenflanken des Schaufelfußes befestigt sind, so dass ein knollenförmiger Schaufelfuß gebildet wird.

2. Schaufel nach Anspruch 1, bei der jede Platte (24) eine im Wesentlichen plane Seitenflanke (26), die dazu bestimmt ist, an einer Seitenflanke des Schaufelfußes in Kontakt zu kommen, sowie eine gegenüberliegende Seitenflanke (28) aufweist, die ein veränderliches Profil aufweist, welches eine Schaufelfußauflagefläche nachbildet.

3. Schaufel nach Anspruch 2, bei der die Platten (24) durch Formen eines Faservorformlings und Verdichten des geformten Vorformlings erhalten werden.

4. Schaufel nach einem der Ansprüche 1 bis 3, bei der die Platten (24) durch Löten, Mitverdichten oder Matrixabscheiden an den Seitenflanken des Schaufelfußes befestigt sind.

5. Schaufel nach einem der Ansprüche 1 bis 4, ferner umfassend eine Plattform (18), die mit dem Blatt und dem Schaufelfuß einstückig ausgebildet ist.

6. Schaufel nach einem der Ansprüche 1 bis 5, bei der der Schaufelfuß (14) und die Platten (24) aus Keramikmatrix-Verbundwerkstoff gefertigt sind.

7. Schaufel nach Anspruch 6, bei der die Platten (24) aus einer Faserverstärkung auf Basis von SiC-Fasern gefertigt sind.

8. Turbomaschine, die eine Vielzahl von Schaufeln (10) nach einem der Ansprüche 1 bis 7 umfasst.

## Claims

1. A turbine engine blade (10) made of composite material comprising fiber reinforcement obtained by three dimensionally weaving yarns and densified with a matrix, the blade comprising an airfoil (12) and a blade root (14) forming a single part, the blade root having two opposite lateral flanks (22) that are substantially plane, the blade being **characterized in that** the blade root is clamped between two independent pads (24) made of composite material, which pads are fastened against the lateral flanks of the blade root so as to form a blade root that is bulb-shaped.

2. A blade according to claim 1, wherein each pad (24) comprises a substantially plane lateral flank (26) for coming into contact with a lateral flank of the blade root, and an opposite lateral flank (28) that presents a varying profile reproducing a blade root bearing surface.

3. A blade according to claim 2, wherein the pads (24) are obtained by molding a fiber preform and densifying the molded preform.

4. A blade according to any one of claims 1 to 3, wherein the pads (24) are fastened against the lateral flanks of the blade root by brazing, by co-densification, or by matrix deposition.

5. A blade according to any one of claims 1 to 4, further including a platform (18) formed integrally with the airfoil and with the blade root.

6. A blade according to any one of claims 1 to 5, wherein the blade root (14) and the pads (24) are made of ceramic matrix composite material.

7. A blade according to claim 6, wherein the pads (24) are made from fiber reinforcement based on SiC fibers.

8. A turbine engine including a plurality of blades (10) according to any one of claims 1 to 7.
